# FASCICULE DE BREVET EUROPEEN

(11) **EP 3 148 835 B1**
(45) Date de publication et mention de la délivrance du brevet: **02.05.2018**
(21) Numéro de dépôt: 15732812.1
(22) Date de dépôt: 27.05.2015
(51) Int. Cl.: B60K 23/02, G05G 1/44

(54) **EMETTEUR D'EMBRAYAGE OPTIMISE**
OPTIMIERTER KUPPLUNGSGEBERZYLINDER
OPTIMISED CLUTCH MASTER CYLINDER

(30) Priorité: 28.05.2014 FR 1454833
(43) Date de publication de la demande: 05.04.2017
(73) Titulaire: Renault S.A.S., 92100 Boulogne-Billancourt (FR)
(72) Inventeur: COUAPEL, Philippe, 75011 Paris (FR); DE BOISSIEU, Cedric, 94500 Champigny sur Marne (FR); DURAND, Stephane, 28630 Bercheres-les-pierres (FR)
(86) Numéro de dépôt international: PCT/FR2015/051399
(87) Numéro de publication internationale: WO 2015/181498

(56) Documents cités:
- DE-A1-102007 051 564
- DE-A1-102009 052 966
- FR-A1- 2 559 105

## Description

L'invention se rapporte à un émetteur d'embrayage optimisé d'un véhicule.

Un système d'embrayage actuel d'un véhicule, et notamment d'un véhicule automobile, comprend un émetteur d'embrayage monté sur une chape de pédalier au moyen de pions de centrage et de vis de fixation. Un émetteur d'embrayage selon le préambule de la revendication 1 est connu du document DE 10 2007 051 564 A1. Or, sous l'effet des efforts engendrés par des pressions répétées sur une pédale d'embrayage, ledit émetteur risque de glisser, et donc de se désolidariser de ladite chape. Il en résulte une probabilité importante que le système d'embrayage n'assure plus avec satisfaction sa fonction originelle.

Pour remédier à un tel problème, il peut être envisagé des solutions privilégiant l'utilisation d'un plus grand nombre de vis ou l'utilisation de vis de dimension plus importante. Toutefois, ces solutions présentent le double inconvénient d'être onéreuses et de rendre le système d'embrayage plus encombrant.

Un émetteur d'embrayage selon l'invention est conçu de manière à interagir de façon optimisée avec une chape de pédalier, afin que le système d'embrayage résultant soit stable dans le temps, tout en s'affranchissant des inconvénients relevés dans l'état de la technique.

L'invention a pour objet un émetteur d'embrayage destiné à être fixé à une chape de pédalier, ledit émetteur possédant au moins un pion de centrage saillant et apte à être inséré dans une ouverture de ladite chape.

La principale caractéristique d'un émetteur d'embrayage selon l'invention, est que chaque pion de centrage possède une nervure créant une surépaisseur pour permettre audit pion d'être au contact d'un bord de ladite chape délimitant l'ouverture. Cette nervure émerge de la surface externe du pion pour créer une surépaisseur. De cette manière, chaque pion de centrage contribue non seulement à positionner correctement l'émetteur d'embrayage sur la chape de pédalier, mais également à encaisser efficacement une partie des efforts générés par les pressions successives exercées sur la pédale d'embrayage. De façon préférentielle, l'émetteur d'embrayage est une pièce en plastique.

Avantageusement, chaque pion de centrage est cylindrique, la nervure s'étendant parallèlement à une génératrice dudit pion. Autrement dit, la nervure s'étend parallèlement à l'axe de révolution du pion de centrage et crée une surépaisseur latérale par rapport audit axe de révolution. Préférentiellement, la nervure est implantée sur un secteur angulaire du pion cylindrique qui est inférieur à 20°. De cette manière, la nervure est allongée le long de l'axe de révolution du pion et possède une faible largeur, tangentiellement audit pion.

De façon préférentielle, chaque pion de centrage présente une extrémité libre, l'épaisseur de la nervure sur le pion croissant progressivement le long dudit pion à partir de ladite extrémité libre. En effet, il est supposé que chaque pion de centrage est introduit dans l'ouverture de la chape par cette extrémité libre. De cette manière, au fur et à mesure que le pion pénètre dans l'ouverture de la chape de pédalier, il est progressivement repoussé par la nervure contre le bord de la chape délimitant ladite ouverture, en raison de l'épaisseur croissante de la nervure.

Selon un mode de réalisation préféré d'un émetteur selon l'invention, la nervure commence au niveau de ladite extrémité libre.

Selon un autre mode de réalisation préféré d'un émetteur selon l'invention, la nervure commence en retrait de ladite extrémité libre.

Avantageusement, un émetteur d'embrayage selon l'invention comporte deux pions de centrage. De cette manière, les efforts engendrés par les pressions successives exercées sur la pédale d'embrayage sont mieux répartis dans l'émetteur d'embrayage, puisque chaque pion encaisse une partie desdits efforts.

De façon préférentielle, les deux pions de centrage sont parallèles.

Préférentiellement, un émetteur d'embrayage selon l'invention, possède deux orifices allongés, destinés chacun à recevoir une vis pour assurer la fixation dudit émetteur sur la chape de pédalier. Ces orifices sont préférentiellement délimités chacun par un cylindre creux, dont la surface interne peut être ou non filetée.

De façon avantageuse, les deux orifices sont parallèles entre eux.

Selon un mode de réalisation préféré d'un émetteur d'embrayage selon l'invention, les deux pions de centrage et les deux orifices sont tous les quatre parallèles entre eux.

L'invention a pour deuxième objet un système d'embrayage d'un véhicule comprenant un émetteur d'embrayage et une chape de pédalier, ledit émetteur étant monté sur ladite chape au moyen d'au moins un pion de centrage.

La principale caractéristique d'un système d'embrayage selon l'invention, est que l'émetteur d'embrayage est conforme à l'invention. Un tel système d'embrayage est stable dans le temps, car la liaison entre l'émetteur d'embrayage et la chape de pédalier présente une grande robustesse, du fait que les pions de centrage sont conçus pour reprendre une partie des efforts de cisaillement. Ainsi, au moment de l'introduction de chaque pion de centrage dans une ouverture de la chape, la nervure va également pénétrer dans ladite ouverture pour permettre audit pion de venir immédiatement au contact d'un bord de la chape délimitant l'ouverture. Autrement dit, c'est le coté du pion, qui est opposé à celui portant la nervure, qui vient en appui contre le bord de la chape délimitant l'ouverture. La nervure a donc tendance à « repousser » le pion dans l'ouverture, pour qu'il vienne au contact dudit bord. Cette mise au contact du pion contre la chape permet ainsi audit pion d'encaisser une partie des efforts générés par l'actionnement répété de la pédale d'embrayage.

Un émetteur d'embrayage selon l'invention présente l'avantage de posséder des pions de centrage ayant une double fonction, à savoir positionner correctement ledit émetteur sur la chape d'embrayage et encaisser une partie des efforts de cisaillement induits par les pressions successives exercées sur la pédale d'embrayage. Il en résulte un gain de place significatif, en évitant de multiplier les moyens de fixation entre ledit émetteur d'embrayage et ladite chape, et donc un gain économique pour les mêmes raisons.

On donne ci-après, une description détaillée d'un mode de réalisation préféré d'un émetteur d'embrayage selon l'invention ainsi que d'un système d'embrayage selon l'invention, en se référant aux figures 1 à 5.
- La figure 1 est une vue en perspective d'un émetteur d'embrayage selon l'invention,
- la figure 2 est une vue schématique montrant la position d'un pion de centrage d'un émetteur d'embrayage de l'état de la technique par rapport à une ouverture correspondante d'une chape de pédalier,
- la figure 3A est une vue schématique montrant la position d'un pion d'indexage d'un émetteur d'embrayage selon l'invention par rapport à une ouverture correspondante d'une chape de pédalier,
- la figure 3B est une vue schématique en coupe axiale longitudinale d'un pion de centrage d'un émetteur d'embrayage selon l'invention,
- la figure 4 est une vue en perspective d'un système d'embrayage selon l'invention,
- la figure 5 est une vue agrandie d'une partie de la figure 3 montrant un émetteur d'embrayage selon l'invention fixé à une chape de pédalier.

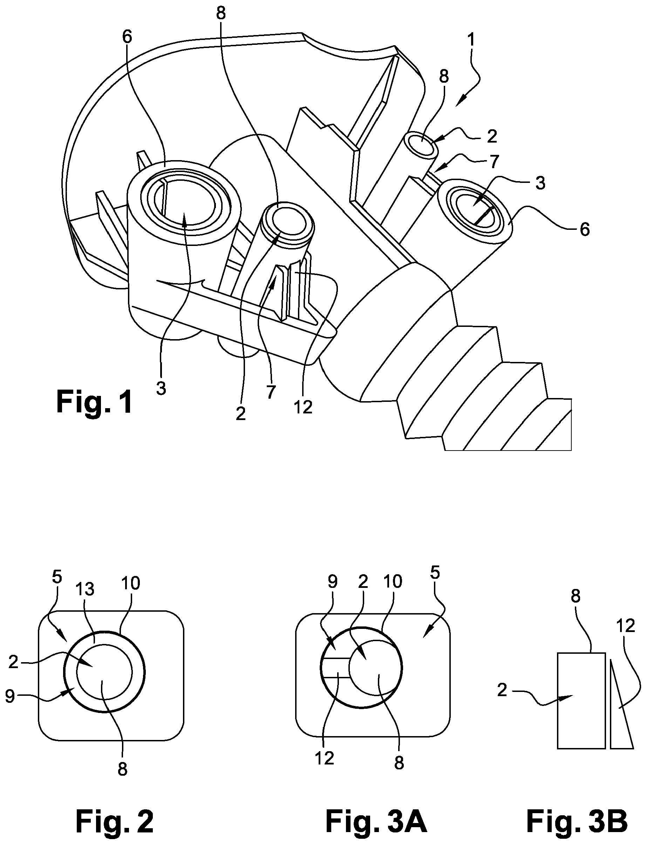

En se référant à la figure 1, un émetteur d'embrayage 1 selon l'invention est une pièce en plastique rigide comprenant deux pions 2 de centrage et deux orifices 3 destinés chacun à recevoir une vis 4 pour assurer la fixation dudit émetteur 1 à une chape 5 de pédalier. Chaque orifice 3 est délimité par une paroi 6 cylindrique creuse, lesdites deux parois cylindriques 6 étant parallèles entre elles. Chaque pion 2 de centrage est également matérialisé par une paroi cylindrique creuse 7 émergeant de l'émetteur d'embrayage 1, ladite paroi creuse 7 présentant une extrémité libre 8 et une base d'ancrage sur ledit émetteur 1. Les deux parois cylindriques creuses 7 matérialisant les pions 2 de centrage sont parallèles entre elles et sont également parallèles aux deux parois cylindriques creuses 6 délimitant les deux orifices 3 destinés chacun à recevoir une vis 4. En d'autres termes, les axes de révolution de ces quatre parois cylindriques creuses 6, 7 sont parallèles entre eux.

En se référant aux figures 2 et 3A, l'émetteur d'embrayage 1 vient se fixer sur la chape 5 de pédalier au moyen d'une introduction de chaque pion 2 de centrage par son extrémité libre 8, dans une ouverture circulaire 9 de ladite chape 5, le diamètre de ladite ouverture 9 étant supérieur au diamètre externe dudit pion 2.

En se référant à la figure 2, chaque pion 2 de centrage d'un émetteur d'embrayage de l'état de la technique pénètre ainsi dans l'ouverture 9 de la chape 5 prévue à cet effet, en occupant une position centrale au sein de ladite ouverture 9. Le diamètre externe du pion 2 étant inférieur au diamètre de l'ouverture 9 de la chape 5, il n'existe ainsi aucun contact entre ledit pion 2 et le bord 10 de ladite chape 5 délimitant ladite ouverture 9. En effet, un espace annulaire 13 subsiste entre la surface externe du pion 2 de centrage et le bord circulaire 10 délimitant l'ouverture 9. Lors d'une reprise d'effort provoqué par une pression exercée sur une pédale d'embrayage 11, l'émetteur d'embrayage va alors glisser jusqu'à ce que le pion 2 de centrage vienne en appui contre le bord 10 de la chape 5 délimitant l'ouverture 9. Ce glissement n'est pas satisfaisant, car il risque à terme de provoquer une perte de la liaison entre ledit émetteur et ladite chape 5.

En se référant aux figures 3A et 3B, chaque pion 2 de centrage d'un émetteur d'embrayage 1 selon l'invention, possède une nervure 12 s'étendant le long dudit pion 2, parallèlement à l'axe de révolution dudit pion 2.

En se référant à la figure 3B, cette nervure 12 présente une épaisseur variable le long du pion 2 de centrage. Plus précisément, l'épaisseur de ladite nervure 12 croît progressivement et de façon monotone le long dudit pion 2, à partir de l'extrémité libre 8, qui est l'extrémité par laquelle ledit pion 2 de centrage est introduit dans l'ouverture 9 de la chape 5. Ainsi, au fur et à mesure que le pion 2 de centrage pénètre dans ladite ouverture 9, la nervure 12 pénètre simultanément dans ladite ouverture 9 en occupant de plus en plus de place dans celle-ci. Ladite nervure 12 a donc tendance à repousser le pion 2 de centrage contre le bord 10 de la chape 5 délimitant l'ouverture 9, le contact entre ledit pion 2 et ledit bord 10 s'effectuant au niveau d'une zone dudit pion 2, qui est diamétralement opposée à celle sur laquelle est implantée la nervure 12.

En se référant à la figure 3A, lorsque le pion 2 de centrage est arrivé en bout de course dans l'ouverture 9 de la chape 5, le pion 2 se retrouve au contact du bord 10 délimitant ladite ouverture 9. De cette manière, les efforts générés par les pressions successives exercées sur la pédale d'embrayage 11 sont en partie repris par les deux pions 2 de centrage, réduisant voire annulant les risques de glissement de l'émetteur d'embrayage 2 et donc les risques de désolidarisation dudit émetteur 1 et de ladite chape 5.

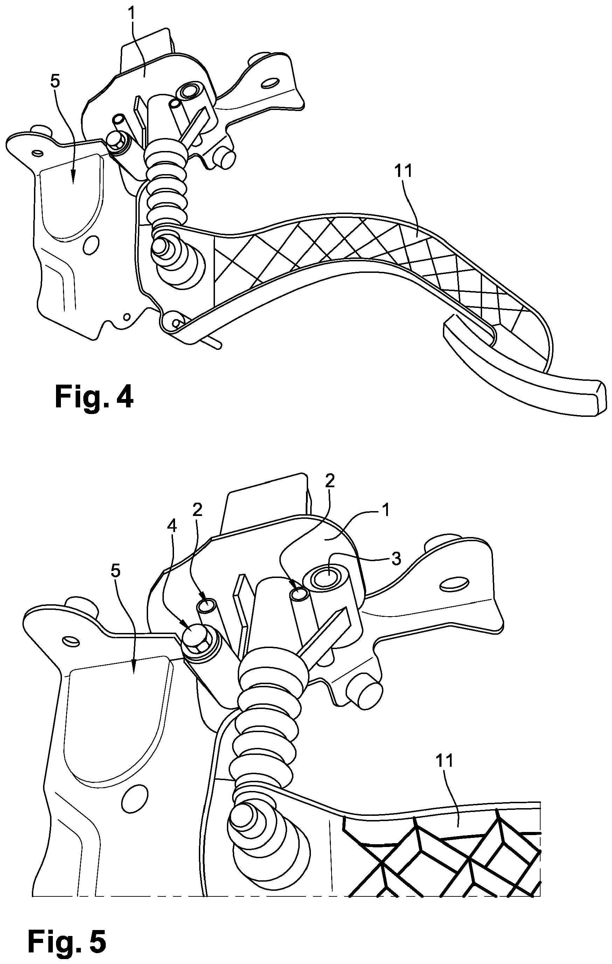

En se référant aux figures 4 et 5, un système d'embrayage 20 selon l'invention comprend une chape de pédalier 5, un émetteur d'embrayage 1 selon l'invention et une pédale d'embrayage 11. L'émetteur d'embrayage 2 est monté dans la chape 5 de pédalier au moyen de la pénétration des deux pions 2 de centrage dotés de leur nervure 12, dans les deux ouvertures 9 de ladite chape 5 prévues à cet effet. En bout de course, grâce à la présence des nervures 12, les deux pions 2 de centrage se retrouvent en butée contre le bord 10 de la chape 5 délimitant chacune desdites ouvertures 9. Deux vis 4 traversant la chape 5 viennent se loger dans les orifices 3 de l'émetteur d'embrayage 1 bordés chacun par une paroi cylindrique 6 creuse, pour fixer ledit émetteur 1 à ladite chape 5.

De cette manière, les efforts induits par les pressions successives exercées sur la pédale d'embrayage 11 sont équitablement répartis sur les deux pions 2 de centrage et sur les deux vis 4 de fixation, éliminant les risques de glissement dudit émetteur d'embrayage 1 et donc les risques de désolidarisation entre celui-ci et la chape 5 de pédalier.

## Revendications

1. Emetteur d'embrayage (1) destiné à être fixé à une chape (5) de pédalier, ledit émetteur (1) possédant au moins un pion (2) de centrage saillant et apte à être inséré dans une ouverture (9) de ladite chape (5), **caractérisé en ce que** chaque pion (2) de centrage possède une nervure (12) créant une surépaisseur pour permettre audit pion (2) d'être au contact d'un bord (10) de ladite chape (5) délimitant l'ouverture (9).

2. Emetteur d'embrayage selon la revendication 1, **caractérisé en ce que** chaque pion (2) de centrage est cylindrique, et **en ce que** la nervure (12) s'étend parallèlement à une génératrice dudit pion (2).

3. Emetteur d'embrayage selon la revendication 2, **caractérisé en ce que** chaque pion (2) de centrage présente une extrémité libre (8), et **en ce que** l'épaisseur de la nervure (12) sur le pion (2) croît progressivement le long dudit pion (2) à partir de ladite extrémité (8) libre.

4. Emetteur d'embrayage selon la revendication 3, **caractérisé en ce que** la nervure (12) commence au niveau de ladite extrémité libre (8).

5. Emetteur d'embrayage selon la revendication 3, **caractérisé en ce que** la nervure (12) commence en retrait de ladite extrémité libre (8).

6. Emetteur d'embrayage selon l'une quelconque des revendications 1 à 5, **caractérisé en ce qu'**il comporte deux pions (2) de centrage.

7. Emetteur d'embrayage selon la revendication 6, **caractérisé en ce que** les deux pions (2) de centrage sont parallèles.

8. Emetteur d'embrayage selon l'une quelconque des revendications 1 à 7, **caractérisé en ce qu'**il possède deux orifices (3) allongés, destinés chacun à recevoir une vis (4) pour assurer la fixation dudit émetteur (1) sur la chape (5) de pédalier.

9. Emetteur d'embrayage selon la revendication 8, **caractérisé en ce que** les deux orifices (3) sont parallèles entre eux.

10. Système d'embrayage d'un véhicule comprenant un émetteur (1) d'embrayage et une chape (5) de pédalier, ledit émetteur (1) étant monté sur ladite chape (5) au moyen d'au moins un pion (2) de centrage, **caractérisé en ce que** l'émetteur (1) d'embrayage est conforme à l'une quelconque des revendications 1 à 9.

## Patentansprüche

1. Kupplungsgeber (1), welcher dafür vorgesehen ist, an einer Pedalabdeckung (5) befestigt zu werden, wobei der Geber (1) mindestens einen Zentrierbolzen (2) besitzt, welcher vorspringt und dafür geeignet ist, in eine Öffnung (9) der Abdeckung (5) eingesetzt zu werden, **dadurch gekennzeichnet, dass** jeder Zentrierbolzen (2) eine Rippe (12) besitzt, welche eine Verdickung bildet, um es dem Bolzen (2) zu ermöglichen, mit einem die Öffnung (9) begrenzenden Rand (10) der Abdeckung (5) in Kontakt zu sein.

2. Kupplungsgeber nach Anspruch 1, **dadurch gekennzeichnet, dass** jeder Zentrierbolzen (2) zylindrisch ist, und dass sich die Rippe (12) parallel zu einer Mantelfläche des Bolzens (2) erstreckt.

3. Kupplungsgeber nach Anspruch 2, **dadurch gekennzeichnet, dass** jeder Zentrierbolzen (2) ein freies Ende (8) aufweist, und dass die Dicke der Rippe (12) auf dem Bolzen (2) schrittweise entlang des Bolzens (2) ausgehend von dem freien Ende (8) anwächst.

4. Kupplungsgeber nach Anspruch 3, **dadurch gekennzeichnet, dass** die Rippe (12) auf Höhe des freien Endes (8) beginnt.

5. Kupplungsgeber nach Anspruch 3, **dadurch gekennzeichnet, dass** die Rippe (12) von dem freien Ende (8) zurückgesetzt beginnt.

6. Kupplungsgeber nach einem der Ansprüche 1 bis 5, **dadurch gekennzeichnet, dass** er zwei Zentrierbolzen (2) umfasst.

7. Kupplungsgeber nach Anspruch 6, **dadurch gekennzeichnet, dass** die beiden Zentrierbolzen (2) parallel sind.

8. Kupplungsgeber nach einem der Ansprüche 1 bis 7, **dadurch gekennzeichnet, dass** er zwei langgestreckte Öffnungen (3) besitzt, welche jeweils dafür vorgesehen sind, eine Schraube (4) aufzunehmen, um die Befestigung des Gebers (1) an der Pedalabdeckung (5) zu gewährleisten.

9. Kupplungsgeber nach Anspruch 8, **dadurch gekennzeichnet, dass** die beiden Öffnungen (3) parallel zueinander verlaufen.

10. Kupplungssystem eines Fahrzeugs, aufweisend einen Kupplungsgeber (1) und eine Pedalabdeckung (5), wobei der Geber (1) an der Abdeckung (5) mittels mindestens eines Zentrierbolzens (2) montiert ist, **dadurch gekennzeichnet, dass** der Kupplungsgeber (1) einem der Ansprüche 1 bis 9 entspricht.

## Claims

1. Clutch transmitter (1) intended to be fixed to a pedal box yoke (5), said transmitter (1) having at least one centering pin (2) that projects and can be inserted into an opening (9) of said yoke (5), **characterized in that** each centering pin (2) has a rib (12) that creates an additional thickness to allow said pin (2) to be in contact with an edge (10) of said yoke (5) delimiting the opening (9).

2. Clutch transmitter according to Claim 1, **characterized in that** each centering pin (2) is cylindrical, and **in that** the rib (12) runs parallel to a generatrix of said pin (2).

3. Clutch transmitter according to Claim 2, **characterized in that** each centering pin (2) has a free end (8), and **in that** the thickness of the rib (12) on the pin (2) increases progressively along said pin (2) starting from said free end (8).

4. Clutch transmitter according to Claim 3, **characterized in that** the rib (12) begins at said free end (8).

5. Clutch transmitter according to Claim 3, **characterized in that** the rib (12) begins short of said free end (8).

6. Clutch transmitter according to any one of Claims 1 to 5, **characterized in that** it comprises two centering pins (2).

7. Clutch transmitter according to Claim 6, **characterized in that** the two centering pins (2) are parallel.

8. Clutch transmitter according to any one of Claims 1 to 7, **characterized in that** it has two elongate orifices (3) which are each intended to accept a screw (4) for fixing said transmitter (1) to the pedal box yoke (5).

9. Clutch transmitter according to Claim 8, **characterized in that** the two orifices (3) are mutually parallel.

10. Vehicle clutch system comprising a clutch transmitter (1) and a pedal box yoke (5), said transmitter (1) being mounted on said yoke (5) by means of at least one centering pin (2), **characterized in that** the clutch transmitter (1) is according to any one of Claims 1 to 9.
